# EUROPÄISCHE PATENTANMELDUNG

(11) **EP 2 147 881 A2**
(43) Veröffentlichungstag der Anmeldung: **27.01.2010**
(21) Anmeldenummer: 09164915.2
(22) Anmeldetag: 08.07.2009
(51) Int. Cl.: B65H 31/24, B65H 31/30, B65G 47/64

(54) **Auslagevorrichtung für flache Produkte**

(30) Priorität: 25.07.2008 DE 102008034765
(71) Anmelder: Heidelberger Druckmaschinen Aktiengesellschaft, 69115 Heidelberg (DE)
(72) Erfinder: Filsinger, Karl-Heinz, 69168, Wiesloch (DE); Frießnegg, Robert, 74348, Laufen (DE)

(57) **Zusammenfassung**

Die Erfindung betrifft eine Auslagevorrichtung (2) für flache Produkte (100) aus Papier, Pappe und dergleichen, umfassend eine Vorrichtung (21) zur Bildung von Stapeln (101) aus den Produkten (100), nachfolgend eine Vorrichtung zur Weiterbearbeitung (27) der Stapel (101), insbesondere eine Vorrichtung zum Banderolieren.

Die Vorrichtung (21) zur Bildung von Stapeln weist zwei Ebenen (22, 23) auf, in welchen die Stapel (101) gebildet werden. Die Vorrichtung zur Weiterbearbeitung (27) der Stapel (101) weist eine Ebene (28) auf, in welcher die Stapel (101) bearbeitet werden. Zwischen der Vorrichtung (21) zur Bildung von Stapeln und der Vorrichtung zur Weiterbearbeitung (27) der Stapel ist eine Transporteinrichtung (24) angebracht, zum Transport der Stapel (101) von der jeweiligen Ebene (22, 23) der Vorrichtung (21) zur Bildung von Stapeln zu der einen Ebene (28) der Vorrichtung zur Weiterverarbeitung (27) der Stapel.

## Beschreibung

Die Erfindung betrifft eine Auslagevorrichtung für flache Produkte gemäß dem Oberbegriff von Anspruch 1 als auch ein Verfahren zum Betreiben einer Auslagevorrichtung gemäß Anspruch 10.

In Druckweiterverarbeitungsmaschinen, wie beispielsweise Falzmaschinen, Sammelheftern, Trimmern und Dreischneidern schließt sich an die eigentliche Bearbeitungsstation eine Auslage für die bearbeiteten Produkte an. Dabei können die Produkte, d. h. gefalzte Signaturen, Broschuren oder Bücher entweder geschuppt ausgelegt werden oder eine bestimmte und vorgegebene Anzahl der Produkte wird auf einem Stapel abgelegt.

Von Heidelberg wird unter dem Namen Twinstacker TSH eine vertikale Stapeleinheit mit zwei übereinander angeordneten Stapelebenen vertrieben. Durch die beiden Stapelebenen wird ein problemloser Nonstop-Betrieb der Stapeleinheit ermöglicht.

Aus dem Stand der Technik sind weiterhin verschiedenartige Vorrichtungen zum Banderolieren bzw. Umreifen von Stapeln von Produkten bekannt. So zeigt beispielsweise die DE OS 26 58 070 einen Eingabetisch mit mehreren parallel zueinander in der Ebene des Eingabetisches angeordneten Banderolierstationen. Die Banderolierstationen dienen dem Umschließen der Stapel mit Banderolen.

Aus der DE 196 15 009 A1 geht ein Kreuzleger mit Umreifungsvorrichtung hervor. Auf einer ersten Ebene in einem Schuppenstrom ankommende Druckerzeugnisse werden gestapelt, der Stapel vertikal nach unten in eine Umreifungsvorrichtung bewegt und dort mit einem Umreifungsband versehen. Eine Vorrichtung von ähnlichem Aufbau zeigt auch die DE 37 05 169 C2: Auf einem Förderband in einer ersten Ebene ankommende Druckerzeugnisse werden gesammelt und gestapelt. Der Stapel wird mittels einer Überführungseinrichtung vertikal nach unten zu einer Verpackungseinrichtung transportiert, wo der Stapel mit einer Banderole versehen wird. In der Ebene der Verpackungseinrichtung und sich an die Verpackungseinrichtung anschließend befindet sich ein Förderband zum Abtransport der banderolierten Stapel.

Aufgabe der vorliegenden Erfindung ist es, eine Auslagevorrichtung für flache Produkte zu schaffen, bei der auf zwei Ebenen gebildete Stapel an eine nachfolgende Vorrichtung zur Weiterverarbeitung, wie beispielsweise eine Vorrichtung zum Banderolieren, übergeben werden können.

Gelöst wird diese Aufgabe durch eine Auslagevorrichtung für flache Produkte mit den kennzeichnenden Merkmalen von Anspruch 1 und durch ein Verfahren gemäß Anspruch 10.

Die erfindungsgemäße Auslagevorrichtung für flache Produkte aus Papier, Pappe und dergleichen umfasst eine Vorrichtung zur Bildung von Stapeln aus den Produkten und nachfolgend eine Vorrichtung zur Weiterbearbeitung der Stapel. Die Vorrichtung zur Bildung von Stapeln besitzt mindestens zwei im wesentlichen horizontale Ebenen, in welchen die Stapel gebildet werden. Die Vorrichtung zur Weiterbearbeitung der Stapel besitzt nur eine im wesentlichen horizontale Ebene, in welcher die Stapel bearbeitet werden. In der Vorrichtung zur Weiterverarbeitung der Stapel werden die Stapel mit dem Fachmann geläufigen Mitteln in Transportrichtung weitertransportiert. Zwischen der Vorrichtung zur Bildung von Stapeln und der Vorrichtung zur Weiterverarbeitung der Stapel ist vorteilhafterweise eine Transporteinrichtung angebracht zum Transport der Stapel von der jeweiligen Ebene der Vorrichtung zur Bildung von Stapeln zu der einen Ebene der Vorrichtung zur Weiterverarbeitung der Stapel. Von der Vorrichtung zur Bildung von Stapeln zur Transporteinrichtung und von der Transporteinrichtung zur Vorrichtung zur Weiterverarbeitung der Stapel werden die Stapel jeweils durch eine Übergabeeinrichtung transportiert. Bei der Übergabeeinrichtung kann es sich beispielweise um horizontal bewegte Mitnehmer, bewegte Greifer, eine angetriebene Rollenbahn oder um angetriebene Förderbänder handeln.

Die Erfindung betrifft auch eine Auslagevorrichtung für flache Produkte aus Papier, Pappe und dergleichen mit einer Vorrichtung zum Banderolieren. Bei den Produkten kann es sich insbesondere um Signaturen oder Broschuren handeln, welche von einer Weiterverarbeitungsmaschine, insbesondere einer Falzmaschine bzw. einem Sammelhefter an die Auslagevorrichtung übergeben werden. Die Auslagevorrichtung umfasst eine Zuführeinrichtung, nachfolgend eine Vorrichtung zur Bildung von Stapeln aus den Produkten und nachfolgend eine Vorrichtung zum Banderolieren der Stapel. Banderolieren meint damit das Versehen des Stapels mit einer Banderole bzw. das Umreifen des Stapels mit einem Umreifungsband. Die Vorrichtung zur Bildung von Stapeln weist mindestens zwei Ebenen auf, wobei in jeder Ebene Stapel gebildet werden. Die Vorrichtung zum Banderolieren weist eine Ebene auf, in welcher die Stapel banderoliert werden. In vorteilhafter Weise ist zwischen der Vorrichtung zur Bildung von Stapeln und der Vorrichtung zum Banderolieren eine Transporteinrichtung angebracht zum Transport der Stapel von der jeweiligen Ebene der Vorrichtung zur Bildung von Stapeln zu der einen Ebene der Vorrichtung zum Banderolieren. Die Transporteinrichtung ermöglicht damit das Zusammenführen des Materialflusses, d.h. das Zusammenführen der Stapel von zwei Ebenen auf eine Ebene. Bänder bzw. Ein- und Ausschubmittel können in dem Fachmann bekannter Weise elektromotorisch angetrieben sein. An die Vorrichtung zum Banderolieren kann sich eine Einrichtung zum Abtransport der Stapel anschließen, welche über eine Speicherstrecke verfügt. Vorteilhaft an einer derartigen Auslagevorrichtung ist, dass nur eine Vorrichtung zum Banderolieren benötigt wird und die Herstellungskosten der Auslagevorrichtung damit gering gehalten werden können. Durch eine entsprechende Ansteuerung der Transporteinrichtung können mit der Auslagevorrichtung flache Produkte mit einer hohen Taktfrequenz gestapelt, banderoliert und ausgelegt werden.

In einer vorteilhaften Weiterbildung der Auslagevorrichtung sind die Vorrichtung zur Bildung von Stapeln, die Transporteinrichtung und die Vorrichtung zum Banderolieren mit einer Steuereinrichtung verbunden. Die Taktfrequenzen, mit denen die Vorrichtung zur Bildung von Stapeln, die Transporteinrichtung und die Vorrichtung zum Banderolieren betrieben werden, können durch die Steuereinrichtung in vorteilhafter Weise gesteuert und relativ zueinander synchronisiert werden.

In einer ersten Ausführungsform der erfindungsgemäßen Auslagevorrichtung verfügt die Transporteinrichtung über eine hubbewegliche Aufnahmeebene. Die hubbewegliche Aufnahmeebene kann eine Hubbewegung zwischen einem oberen und einem unteren Umkehrpunkt ausführen. Die Aufnahmeebene kann dabei in dem Fachmann bekannter Weise elektromotorisch angetrieben werden. Der obere Umkehrpunkt liegt dabei auf Höhe der oberen Ebene der Vorrichtung zur Bildung von Stapeln, der untere Umkehrpunkt liegt auf Höhe der unteren Ebene der Vorrichtung zur Bildung von Stapeln. Die Ebene der Vorrichtung zum Banderolieren liegt zwischen dem oberen und dem unteren Umkehrpunkt oder auch bevorzugterweise auf der Ebene eines Umkehrpunktes.

In einer zweiten Ausführungsform der erfindungsgemäßen Auslagevorrichtung verfügt die Transporteinrichtung über eine schwenkbare Aufnahmeebene. Die Schwenkachse der Aufnahmeebene befindet sich dabei auf Höhe der einen Ebene der Vorrichtung zum Banderolieren. Die Aufnahmeebene kann eine Schwenkbewegung so durchführen, dass das bewegte Ende der Aufnahmeebene sich in seinem höchsten Punkt auf Höhe der oberen Ebene der Vorrichtung zur Bildung von Stapeln und in seinem untersten Punkt auf Höhe der unteren Ebene der Vorrichtung zur Bildung von Stapeln liegt.

In einer dritten besonders vorteilhaften Ausführungsform der erfindungsgemäßen Auslagevorrichtung verfügt die Transporteinrichtung über zwei hubbewegliche Aufnahmeebenen. Eine erste Aufnahmeebene ist der ersten Ebene der Vorrichtung zur Bildung von Stapeln zugeordnet, eine zweite Aufnahmeebene ist der zweiten Ebene der Vorrichtung zur Bildung von Stapeln zugeordnet. Eine jeweilige Aufnahmeebene hat dabei zwei vertikal verschiedene Endlagen, wobei die eine auf der Höhe einer Ebene der Vorrichtung zur Bildung von Stapeln und die andere Endlage auf der Höhe der einen Ebene der Vorrichtung zum Banderolieren ist. Die Aufnahmeebenen können dabei in dem Fachmann bekannter Weise elektromotorisch angetrieben werden. Dazu kann entweder ein Elektromotor mit entsprechendem Getriebe mit beiden Aufnahmeebenen gekoppelt sein oder einer jeweiligen Aufnahmeebene ist je ein Elektromotor zugeordnet.

In einer besonders vorteilhaften Weiterbildung der erfindungsgemäßen Auslagevorrichtung sind die Hubbewegungen der zwei Aufnahmeebenen miteinander synchronisiert. Die Synchronisation kann dabei durch eine mechanische Kopplung der Aufnahmeebenen mit einem gemeinsamen Antrieb oder durch eine Steuereinrichtung zur Ansteuerung von zwei Antrieben erfolgen, wobei jeder Aufnahmeebene ein Antrieb zugeordnet ist.
Besonders vorteilhaft ist es, wenn die eine Ebene der Vorrichtung zur Weiterverarbeitung der Stapel in ihrer vertikalen Ausrichtung mittig zwischen den beiden Ebenen der Vorrichtung zur Bildung von Stapeln angeordnet ist und wenn der Abstand der zwei Aufnahmeebenen voneinander dem Abstand einer jeweiligen Ebene der Vorrichtung zur Bildung von Stapeln von der einen Ebene der Vorrichtung zur Weiterverarbeitung entspricht. Bei einer derartigen Ausführung kann zeitgleich ein Stapel von der Vorrichtung zur Bildung von Stapeln auf eine der Aufnahmeebenen und ein anderer Stapel von der anderen Aufnahmeebene an die eine Ebene der Vorrichtung zur Weiterverarbeitung der Stapel übergeben werden.

Die Erfindung betrifft auch ein Verfahren zum Betreiben einer Auslagevorrichtung mit einer Vorrichtung zur Bildung von Stapeln, einer Transporteinrichtung und einer Vorrichtung zum Banderolieren. Von einer Weiterverarbeitungsmaschine kommende flache Produkte werden in die Vorrichtung zur Bildung von Stapeln geleitet. Dort wird zuerst auf einer der beiden Ebenen ein Stapel gebildet; nach Fertigstellung des Stapels wird auf der zweiten Ebene ein Stapel gebildet. Sobald ein Stapel fertig gebildet wurde, wird dieser von der Ebene der Vorrichtung zur Bildung von Stapeln auf die zugeordnete Aufnahmeebene der Transporteinrichtung ausgeschoben bzw. weitertransportiert. Die Aufnahmeebene fährt nachfolgend bis auf die Höhe der einen Ebene der Vorrichtung zum Banderolieren, um den Stapel dort an die Vorrichtung zum Banderolieren weiterzugeben. Während ein fertig gebildeter Stapel von einer der Ebenen der Vorrichtung zur Bildung von Stapeln an die zugeordnete Aufnahmeebene der Transporteinrichtung weitergegeben wird, kann bereits zeitgleich ein anderer Stapel von der anderen Aufnahmeebene an die eine Ebene der Vorrichtung zum Banderolieren weitergegeben werden. Die Hubbewegungen der beiden Aufnahmeebenen sind also so miteinander synchronisiert, dass eine höchstmögliche Transportleistung der Transporteinrichtung sichergestellt ist. Dies wird in vorteilhafter Weise dadurch erreicht, dass während ein Stapel gebildet wird, ein anderer Stapel bereits an die Vorrichtung zum Banderolieren übergeben wird. Auch der Einsatz von zwei hubbeweglichen Aufnahmeebenen trägt zu einer hohen Transportleistung bei.

Hinsichtlich weiterer Vorteile und vorteilhafter Ausgestaltungen der Erfindung wird auf die Unteransprüche sowie die Beschreibung eines Ausführungsbeispiels unter Bezugnahme auf die beiliegenden Zeichnungen verwiesen.

### Ausführungsbeispiel:

Die Erfindung soll anhand eines Ausführungsbeispiels noch näher erläutert werden. Es zeigen in schematischer Darstellung
- Fig. 1a: eine Übersichtsdarstellung der erfindungsgemäßen Auslagevorrichtung in einer ersten vorteilhaften Ausführungsform
- Fig. 1b: die Übergabe eines Stapels von der Vorrichtung zur Bildung von Stapeln an die Vorrichtung zum Banderolieren mittels einer Transporteinrichtung
- Fig. 1c: die Übergabe eines Stapels von der Vorrichtung zur Bildung von Stapeln an die Vorrichtung zum Banderolieren mittels einer Transporteinrichtung in einer anderen Ausführungsform
- Fig. 2a: eine zweite Ausführungsform einer erfindungsgemäßen Auslagevorrichtung
- Fig. 2b: eine dritte Ausführungsform einer erfindungsgemäßen Auslagevorrichtung
- Fig. 3a: eine erste alternative Auslagevorrichtung
- Fig. 3b: eine zweite alternative Auslagevorrichtung

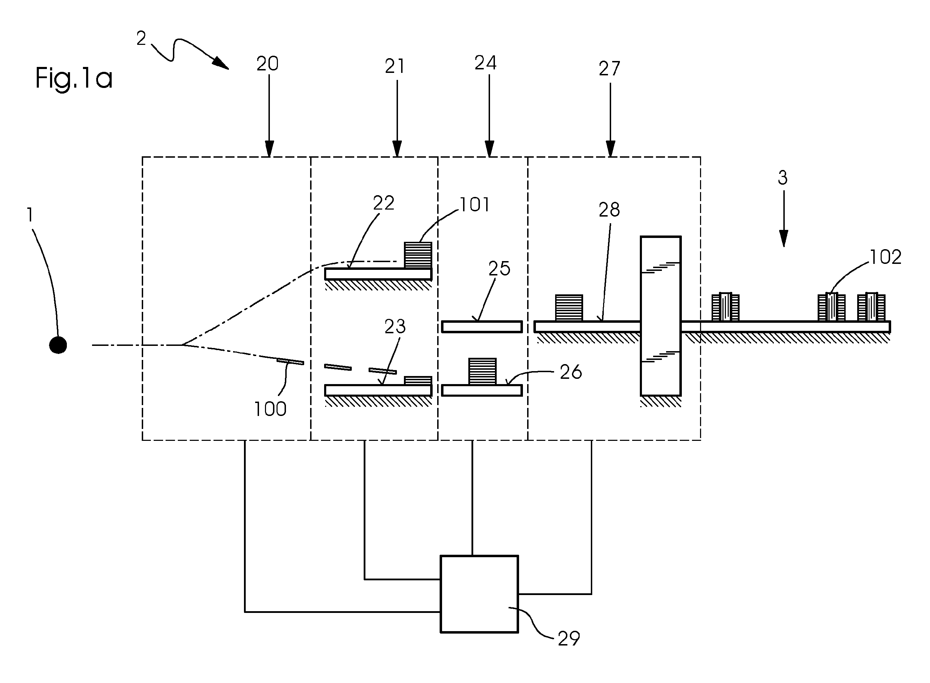

In Fig. 1a ist eine besonders bevorzugte Ausführungsform der erfindungsgemäßen Auslagevorrichtung 2 dargestellt. Gefalzte Signaturen 100 werden von einer Weiterverarbeitungsmaschine 1, hier einer Falzmaschine, kommend zu einer Auslagevorrichtung 2 transportiert. An die Auslagevorrichtung 2 schließt sich eine Einrichtung 3 zum Abtransport mit Speicher an. Die von der Weiterverarbeitungsmaschine 1 kommenden gefalzten Signaturen 100 können von einer Zuführeinrichtung 20 entweder in die obere Ebene 22 der Vorrichtung 21 zur Bildung von Stapeln oder in die untere Ebene 23 der Vorrichtung 21 zur Bildung von Stapeln transportiert werden. Der Transportweg durch die Zuführeinrichtung 20 ist durch eine strich-punktierte Linie angedeutet. Die Zuführeinrichtung kann beispielsweise durch Transportbandpaare gebildet werden. Die Signaturen 100 werden zwischen den Transportbändern bis zum Ort ihrer Stapelbildung transportiert. In der Momentaufnahme von Fig. 1a werden die gefalzten Signaturen 100 in die untere Ebene 23 der Vorrichtung zur Bildung von Stapeln 21 geleitet und dort zu einem Stapel gestapelt. In der oberen Ebene 22 der Vorrichtung 21 zur Bildung von Stapeln befindet sich ein bereits fertig gebildeter Stapel 101. Der oberen Ebene 22 der Vorrichtung 21 zur Bildung von Stapeln ist eine obere Aufnahmeebene 25 der Transporteinrichtung 24 zugeordnet. Der unteren Ebene 23 der Vorrichtung zur Bildung von Stapeln 21 ist eine untere Aufnahmeebene 26 der Transporteinrichtung 24 zugeordnet. Auf der unteren Aufnahmeebene 26 befindet sich ein Stapel 101, welcher von der unteren Ebene 23 an die untere Aufnahmeebene 26 übergeben wurde. Von der oberen Aufnahmeebene 25 wurde ein Stapel 101 an die Arbeitsebene 28 der Vorrichtung zum Banderolieren 27 übergeben. Dieser Stapel 101 wird durch die Vorrichtung zum Banderolieren 27 transportiert und darin mit einer Banderole versehen. Der fertig banderolierte Stapel 102 wird von der Vorrichtung zum Banderolieren 27 übergeben an die Einrichtung zum Abtransport 3 und auf einer Speicherstrecke abgelegt. Wie in Fig. 1a angedeutet, sind die Vorrichtung 21 zur Bildung von Stapeln, die Transporteinrichtung 24 und die Vorrichtung zum Banderolieren 27 mit einer Steuereinrichtung 29 verbunden. Die Steuereinrichtung 29 stimmt den Prozess der Stapelbildung in der Vorrichtung 21 zur Bildung von Stapeln, die Hubbewegungen der Aufnahmeebene 25, 26 der Transporteinrichtung 24 und den Banderolierprozess in der Vorrichtung zum Banderolieren 27 zeitlich aufeinander ab.

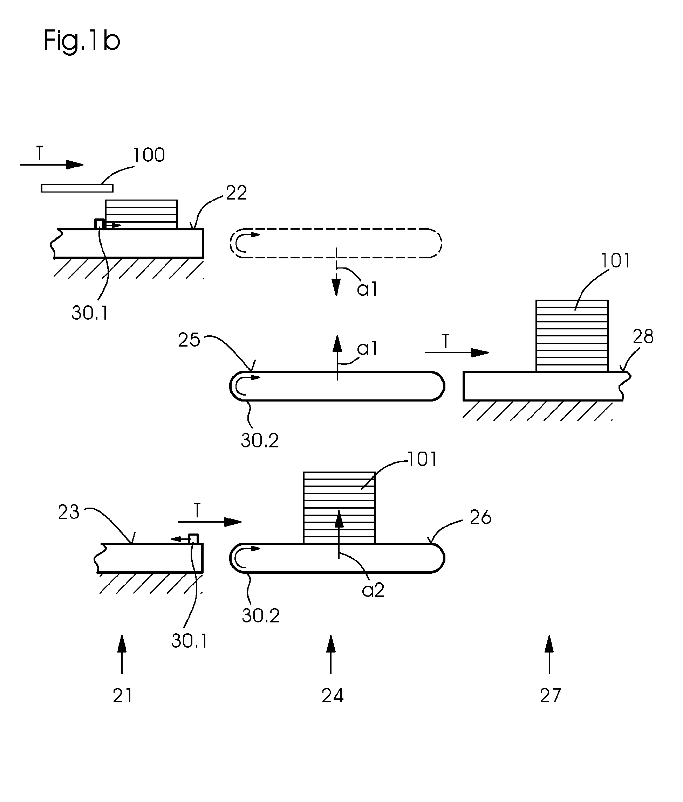

In Fig. 1b ist die Übergabe eines Stapels 101 von der Vorrichtung zur Bildung von Stapeln 21 an die Vorrichtung zum Banderolieren 27 mittels einer Transporteinrichtung 24 in einer Momentaufnahme im Detail dargestellt. Ein in der unteren Ebene 23 der Vorrichtung 21 zur Bildung von Stapeln gebildeter Stapel 101 wurde soeben von einer als Mitnehmerstift ausgebildeten Übergabeeinrichtung 30.1 in Transportrichtung T von der unteren Ebene 23 an die untere Aufnahmeebene 26 der Transporteinrichtung 24 übergeben. In einem nächsten Schritt wird die untere Aufnahmeebene 26 durch eine Hubbewegung a2 angehoben werden bis sich die untere Aufnahmeebene 26 auf Höhe der Arbeitsebene 28 der Vorrichtung zum Banderolieren 27 befindet. Dort befindet sich im dargestellten Moment noch die obere Aufnahmeebene 25. Von dieser wurde soeben ein Stapel 101 von einer als Förderband ausgebildeten Übergabeeinrichtung 30.2 an die Arbeitsebene 28 der Vorrichtung zum Banderolieren 27 in Transportrichtung T übergeben. Damit die untere Aufnahmeebene 26 in ihre obere Position verfahren kann, wird die obere Aufnahmeebene 25 ebenfalls synchron in Hubbewegungsrichtung a1 nach oben bewegt. Die obere Aufnahmeebene 25 wird dabei in ihre obere Position auf Höhe der oberen Ebene 22 der Vorrichtung 21 zur Bildung von Stapeln (punktiert dargestellt) angehoben. Während der fertig gebildete Stapel 101 von der unteren Ebene 23 mittels der Transporteinrichtung 24 an die Vorrichtung zum Banderolieren 27 übergeben wird, werden in der oberen Ebene 22 der Vorrichtung 21 zur Bildung von Stapeln einzelne gefalzte Signaturen 100 aufeinander abgelegt und es wird so ein nächster Stapel gebildet.

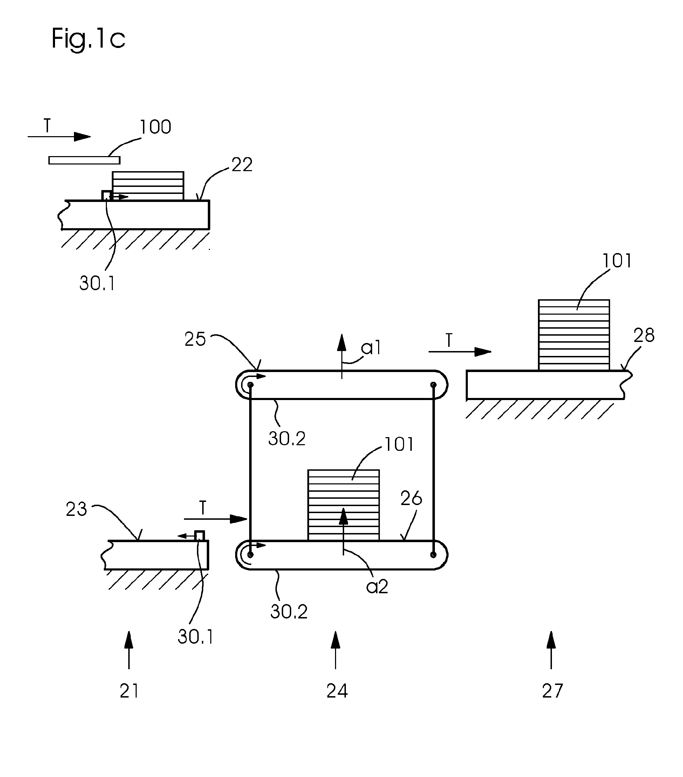

Fig. 1c veranschaulicht in gleicher Weise eine Übergabe von Stapeln 101. Im Gegensatz zur Darstellung aus Fig. 1b sind in dieser Ausführungsform die Aufnahmeebenen 25, 26 der Transporteinrichtung 24 mechanisch miteinander gekoppelt. Damit sind auch die Hubbewegungen a1 und a2 miteinander gekoppelt.
Die eine Ebene 28 der Vorrichtung zum Banderolieren 27 ist in ihrer vertikalen Ausrichtung mittig zwischen den beiden Ebenen 22, 23 der Vorrichtung 21 zur Bildung von Stapeln angeordnet ist. Der vertikale Abstand der zwei Aufnahmeebenen 25, 26 voneinander entspricht dem vertikalen Abstand zwischen einer jeweiligen Ebenen 22, 23 der Vorrichtung 21 zur Bildung von Stapeln und der einen Ebene 28 der Vorrichtung zum Banderolieren 27.

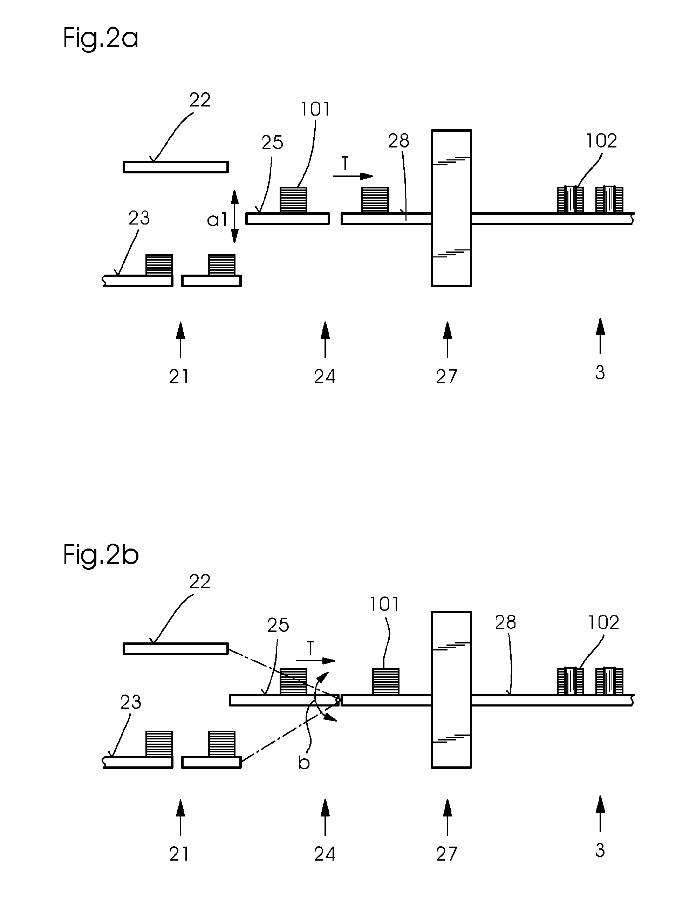

In den Figuren 2a und 2b sind jeweils alternative Ausführungsformen der erfindungsgemäßen Auslagevorrichtung dargestellt. Zur besseren Übersicht werden nur die wesentlichen Unterschiede dargestellt. Zuführeinrichtung 20 und Steuereinheit 29 können wie in den Figuren 1a und 1b dargestellt ausgeführt sein. In Fig. 2a befindet sich zwischen der Vorrichtung zur Bildung von Stapeln 21 und der Vorrichtung zum Banderolieren 27 eine Transporteinrichtung 24 mit nur einer Aufnahmeebene 25. Diese Aufnahmeebene 25 ist hubbeweglich a1 und kann von ihrer obersten Position, wo sie sich auf Höhe der oberen Ebene 22 der Vorrichtung zur Bildung von Stapeln 21 vorbei an der Arbeitsebene 28 der Vorrichtung zum Banderolieren 27 bis in ihre unterste Lage, wo sie sich auf Höhe der unteren Ebene 23 der Vorrichtung zur Bildung von Stapeln 21 befindet, bewegt werden. Die in Fig. 2b dargestellte Ausführungsform weist ebenfalls eine Transporteinrichtung 24 mit nur einer Aufnahmeebene 25 auf. Die Aufnahmeebene 25 ist im Gegensatz zu den zuvor beschriebenen Ausführungsformen nicht hubbeweglich sondern schwenkbar b. Die Schwenkachse der Aufnahmeebene 25 befindet sich auf Höhe der Arbeitsebene 28 der Vorrichtung zum Banderolieren. Der Schwenkbereich der Aufnahmeebene 25 erstreckt sich von einer strichpunktiert dargestellten obersten Position, wo die Aufnahmeebene 25 Stapel von der oberen Ebene 22 der Vorrichtung 21 zur Bildung von Stapeln übernehmen kann bis zu einer unteren strichpunktiert dargestellten Position, wo die Aufnahmeebene 25 in der unteren Ebene 23 der Vorrichtung 21 zur Bildung von Stapeln gebildete Stapel 101 übernehmen kann.

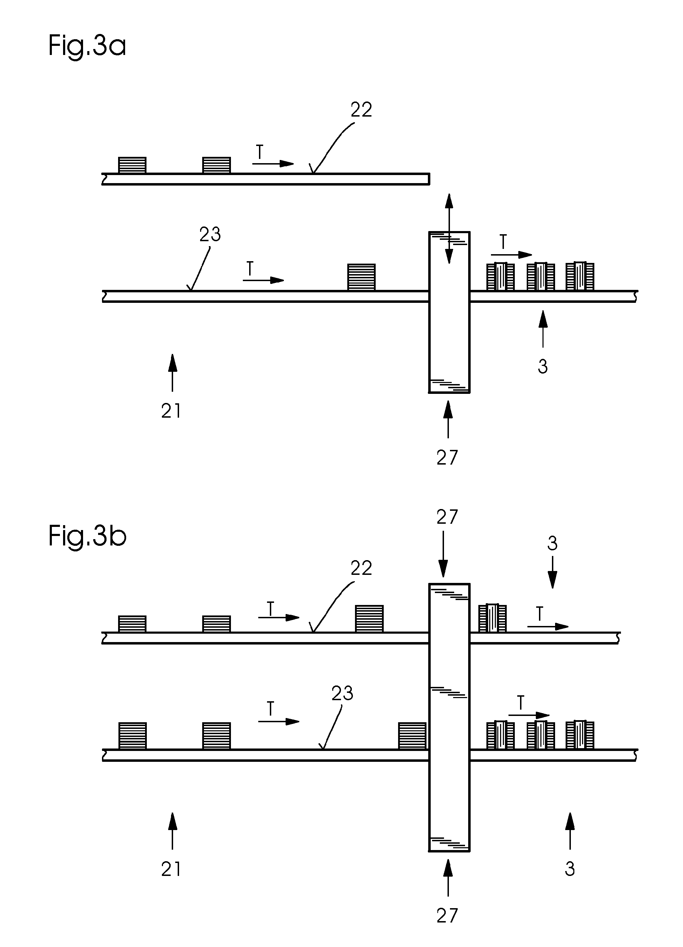

In den Figuren 3a und 3b sind mögliche weniger vorteilhafte Auslagevorrichtungen dargestellt.
In Fig. 3a ist in die Vorrichtung zum Banderolieren 27 eine Hubeinrichtung integriert. Diese kann beispielsweise als ein Lift ausgeführt sein. Eine Banderoliereinheit der Vorrichtung zum Banderolieren 27 kann durch diesen Lift vertikal verschoben werden, so dass die Banderoliereinheit Stapel sowohl von der oberen Ebene 22 als auch von der unteren Ebene 23 der Vorrichtung 21 zur Bildung von Stapeln übernehmen kann. Dabei handelt es sich um eine konstruktionstechnisch aufwendige und komplizierte Variante. Durch die Vertikalbewegung der Banderoliereinheit wird zusätzlich die Leistung der Auslagevorrichtung 2 begrenzt.
Fig. 3b zeigt eine teure Variante einer Auslagevorrichtung: An die obere Ebene 22 der Vorrichtung 21 zur Bildung von Stapeln schließt sich eine Vorrichtung zum Banderolieren 27 und nachfolgend eine Einrichtung zum Abtransport mit Speicher 3 an. Auch an die untere Ebene 23 der Vorrichtung 21 zur Bildung von Stapeln schließt sich eine Vorrichtung zum Banderolieren 27 und eine Einrichtung zum Abtransport mit Speicher 3 an. Der Einsatz von zwei Vorrichtungen zum Banderolieren 27 und zwei Einrichtungen zum Abtransport mit Speicher 3 stellt eine kostenintensive Lösung dar und ist damit nachteilig.

### Bezugszeichenliste

- 1: Weiterverarbeitungsmaschine
- 2: Auslagevorrichtung
- 3: Einrichtung zum Abtransport mit Speicher

- 20: Zuführeinrichtung
- 21: Vorrichtung zur Bildung von Stapeln
- 22: Obere Ebene der Vorrichtung zur Bildung von Stapeln
- 23: Untere Ebene der Vorrichtung zur Bildung von Stapeln
- 24: Transporteinrichtung
- 25: Obere Aufnahmeebene der Transporteinrichtung
- 26: Untere Aufnahmeebene der Transporteinrichtung
- 27: Vorrichtung zum Banderolieren
- 28: Arbeitsebene der Vorrichtung zum Banderolieren
- 29: Steuereinrichtung
- 30.1: Übergabeeinrichtung der Vorrichtung zur Stapelbildung
- 30.2: Übergabeeinrichtung der Transporteinrichtung

- 100: gefalzte Signatur
- 101: Stapel von Signaturen
- 102: Banderolierter Stapel von Signaturen

- a1: Hubbewegung der oberen Aufnahmeebene
- a2: Hubbewegung der unteren Aufnahmeebene
- b: Schwenkbewegung der Aufnahmeebene
- T: Transportrichtung

## Patentansprüche

1. Auslagevorrichtung (2) für flache Produkte (100) aus Papier, Pappe und dergleichen, umfassend eine Vorrichtung (21) zur Bildung von Stapeln (101) aus den Produkten (100), sowie nachfolgend eine Vorrichtung zur Weiterbearbeitung (27) der Stapel (101),
**dadurch gekennzeichnet,**
**dass** die Vorrichtung (21) zur Bildung von Stapeln mindestens zwei horizontale Ebenen (22, 23) aufweist, in welchen die Stapel (101) gebildet werden, und dass die Vorrichtung zur Weiterbearbeitung (27) der Stapel (101) eine horizontale Ebene (28) aufweist, in welcher die Stapel (101) bearbeitet werden,
wobei zwischen der Vorrichtung (21) zur Bildung von Stapeln und der Vorrichtung zur Weiterbearbeitung (27) der Stapel eine Transporteinrichtung (24) angebracht ist, welche die Stapel (101) von der jeweiligen horizontalen Ebene (22, 23) der Vorrichtung (21) zur Bildung von Stapeln zu der einen horizontalen Ebene (28) der Vorrichtung zur Weiterverarbeitung (27) der Stapel transportiert, und
wobei die Transporteinrichtung (24) eine Übergabeeinrichtung (30.2) aufweist zur Übergabe von Stapel (101) an die Vorrichtung zur Weiterverarbeitung (27), und wobei die Vorrichtung (21) zur Bildung von Stapeln eine Übergabeeinrichtung (30.1) aufweist zur Übergabe von Stapeln (101) an die Transporteinrichtung (24).

2. Auslagevorrichtung (2) nach Anspruch 1
**dadurch gekennzeichnet,**
**dass** es sich bei den flachen Produkten (100) insbesondere um Signaturen oder Broschuren aus einer Weiterverarbeitungsmaschine (1) handelt, insbesondere einer Falzmaschine oder einem Sammelhefter, dass vor der Vorrichtung (21) zur Bildung von Stapeln (101) eine Zuführeinrichtung (20) zum Zuführen von Produkten (100) angeordnet ist und dass es sich bei der Vorrichtung zur Weiterverarbeitung (27) der Stapel um eine Vorrichtung zum Banderolieren (27) der Stapel (101) handelt.

3. Auslagevorrichtung nach einem der vorangehenden Ansprüche,
**dadurch gekennzeichnet,**
**dass** die Vorrichtung (21) zur Bildung von Stapeln, die Transporteinrichtung (24) und die Vorrichtung zur Weiterverarbeitung (27) mit einer Steuereinrichtung (29) verbunden sind.

4. Auslagevorrichtung nach einem der vorangehenden Ansprüche,
**dadurch gekennzeichnet,**
**dass** die Transporteinrichtung (24) über eine hubbewegliche horizontale Aufnahmeebene (25) verfügt.

5. Auslagevorrichtung nach einem der vorangehenden Ansprüche,
**dadurch gekennzeichnet,**
**dass** die Transporteinrichtung (24) über eine schwenkbare Aufnahmeebene (25) verfügt.

6. Auslagevorrichtung nach einem der vorangehenden Ansprüche,
**dadurch gekennzeichnet,**
**dass** die Transporteinrichtung (24) über zwei hubbewegliche horizontale Aufnahmeebenen (25, 26) verfügt.

7. Auslagevorrichtung nach Anspruch 6,
**dadurch gekennzeichnet,**
**dass** die Hubbewegungen (a1, a2) der zwei horizontalen Aufnahmeebenen (25, 26) miteinander synchronisiert sind.

8. Auslagevorrichtung nach Anspruch 7,
**dadurch gekennzeichnet,**
**dass** die Synchronisation durch eine mechanische Kopplung der horizontalen Aufnahmeebenen (25, 26) erfolgt.

9. Auslagevorrichtung nach einem der Ansprüche 6 bis 8,
**dadurch gekennzeichnet,**
**dass** die eine Ebene (28) der Vorrichtung zur Weiterverarbeitung (27) der Stapel in ihrer vertikalen Ausrichtung mittig zwischen den beiden Ebenen (22, 23) der Vorrichtung (21) zur Bildung von Stapeln angeordnet ist und dass der vertikale Abstand der zwei Aufnahmeebenen (25, 26) voneinander dem vertikalen Abstand zwischen einer jeweiligen Ebene (22, 23) der Vorrichtung (21) zur Bildung von Stapeln und der einen Ebene (28) der Vorrichtung zur Weiterverarbeitung (27) von Stapeln entspricht.

10. Verfahren zum Betreiben einer Auslagevorrichtung (2) nach Anspruch 3 und einem der Ansprüche 7 bis 9,
**gekennzeichnet durch** nachfolgende Schritte:
a) Abwechselndes Bilden von Stapeln (101) auf den beiden horizontalen Ebenen (22, 23) der Vorrichtung (21) zur Bildung von Stapeln
b) Weitergabe eines ersten gebildeten Stapels (101) von einer der horizontalen Ebenen (22, 23) der Vorrichtung (21) zur Bildung von Stapeln an eine der horizontalen Aufnahmeebenen (25, 26) der Transporteinrichtung (24) **durch** eine Übergabeeinrichtung (30.1)
c) In etwa zeitgleiches Übergeben eines Stapels (101) von der anderen horizontalen Aufnahmeebene (26, 25) an die eine horizontale Ebene (28) der Vorrichtung zum Banderolieren (27) **durch** eine Übergabeeinrichtung (30.2),
d) Hubbewegung (a1, a2) der beiden horizontalen Aufnahmeebenen (25, 26) wobei sich die Schritte a) bis d) wiederholen.
